# EUROPEAN PATENT APPLICATION

(11) **EP 3 337 067 A1**
(43) Date of publication of application: **20.06.2018**
(21) Application number: 16306695.4
(22) Date of filing: 15.12.2016
(51) Int. Cl.: H04J 3/08

(54) **EFFICIENT TRANSPORT MECHANISM IN ETHERNET TRANSPORT NETWORKS**

(71) Applicant: Alcatel Lucent, 91620 Nozay (FR)
(72) Inventor: GEBHARD, Ulrich, 70435 Stuttgart (DE)
(74) Representative: MERH-IP Matias Erny Reichl Hoffmann Patentanwälte PartG mbB

(57) **Abstract**

This application relates to a method for transmitting a client stream comprising at least one client packet through an optical transmission network comprising multiple nodes by synchronously placing the at least one client packet in one or more containers that are routed through the network based on address information in container headers. A container comprises a sequence of subcontainers having subcontainer headers and payload portions. The method comprising obtaining the client stream at a client interface. The client stream comprises the at least one client packet and idle symbols. The method also comprises inserting the client stream in one or more payload portions of subcontainers. The method further comprises determining whether a subcontainer payload portion only comprises idle symbols and in response, marking the subcontainer as idle subcontainer to make the idle subcontainer available for transport of another client stream. The method also comprises transmitting the one or more containers on an interface of the optical transmission network.

## Description

### Technical Field

This application relates to optical data transmission systems, and more particularly, to methods and devices for including data packets into a container passing a node thereby aggregating data to be directed to a destination node.

### Background

In current optical networks such as Synchronous Digital Hierarchy (SDH) or Optical Transport Network (OTN), Ethernet clients are interconnected through digital transmission lines with constant, exclusively reserved capacity. Such a connection is widely referred to as a Carrier-Ethernet (CE) connection. Protection against failure is typically performed by reserving one or more backup links which can be realized on the optical layer (e.g. 1+1 protection) where a copy of a client signal is permanently transmitted on the backup path. Alternatively, backup links can also be realized on the electronical layer, where backup links are only activated and carry client traffic when needed (e.g. Link Aggregation Group (LAG) with active/standby link), or permanently, when used in load-sharing mode, e.g. Ethernet Ring Protection (ERP) or load-sharing LAG.

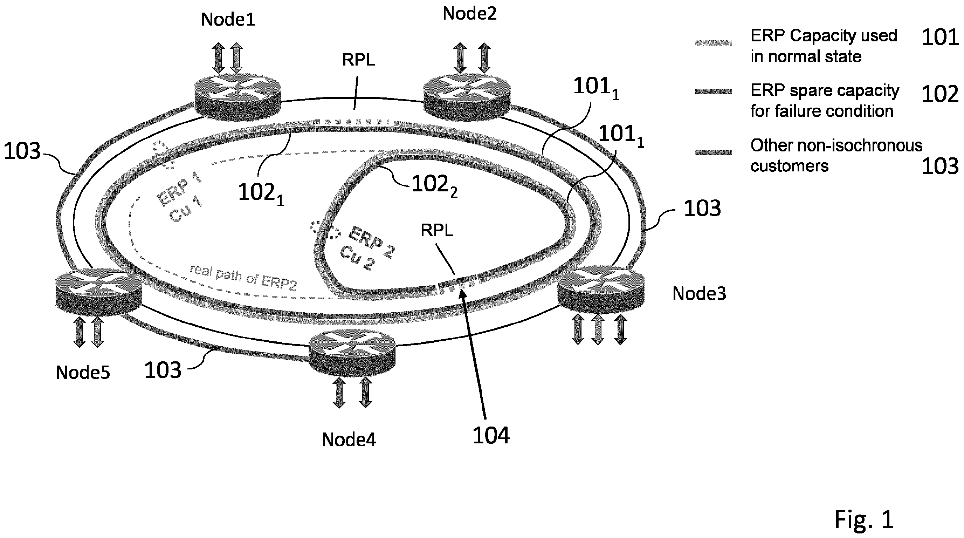

**Fig. 1** shows a sample scenario in which 2 ERP customers with reservation and other customers without reservation share a transport network ring. Three different paths are shown to represent ERP capacity used in normal state (indicated by path 101), ERP spare capacity for failure condition (indicated by path 102) and other non-isochronous customers (indicated by path 103). Isochronous traffic implies constant bit rate where reserved time slots are periodically provided and containers are transmitted in fixed time periods. Non-isochronous traffic does not have such reserved periodic time slots or containers. The terms "isochronous" and "reserved" are interchangeably used in the following.

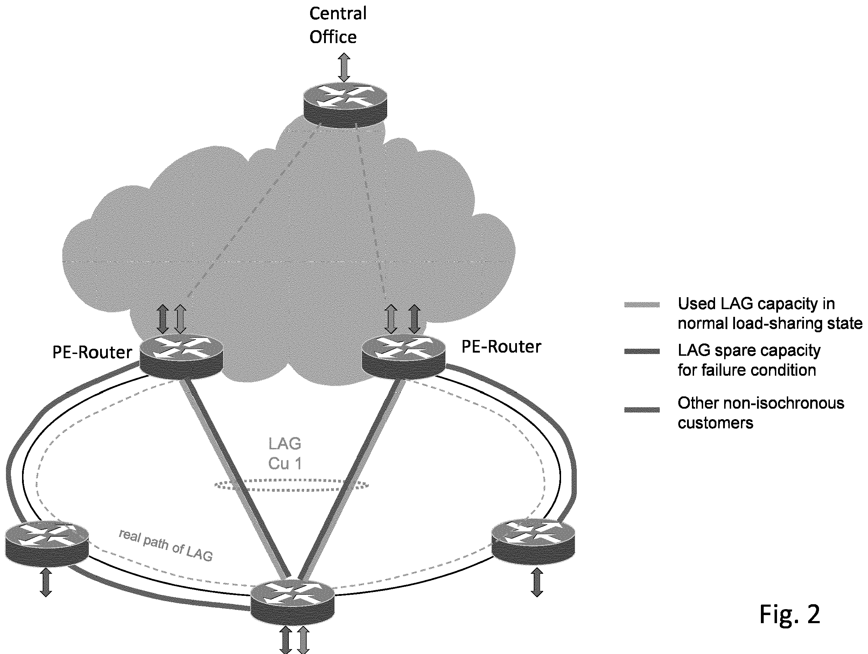

In a normal state, the Ring Protection Link (RPL) is deactivated and traffic flows occupy the reserved ERP capacity used in the normal state as indicated by path **101.** If a link failure occurs (e.g. between nodes 3 and 4 as indicated by 104), the RPL of the customer cu1 (as indicated by 102₁) is activated such that interrupted traffic flows (e.g. from node 5 to node 3) will use the ERP spare capacity in the other direction (i.e. via node 1 instead of via node 4) as indicated by path **102₁.** The ERP spare capacity for failure conditions needs to be reserved in advance to be ready when needed. As illustrated in **Fig. 1****,** cu1 is present at nodes 1, 3, and 5, while nodes 2 and 4 are transit nodes for cu1, in which the physical layer connection is switched through transparently and cannot be accessed by other customers there. Similarly, nodes 1 and 5 are transit nodes for cu2 who is present at nodes 2, 3, and 4. However, both ERP paths need to follow the fiber topology and occupy capacity along the entire transport network ring. Another example scenario is shown in **Fig. 2** in which a LAG is used to connect a customer site to e.g. a central office or another cloud destination via different provider edge (PE) routers.

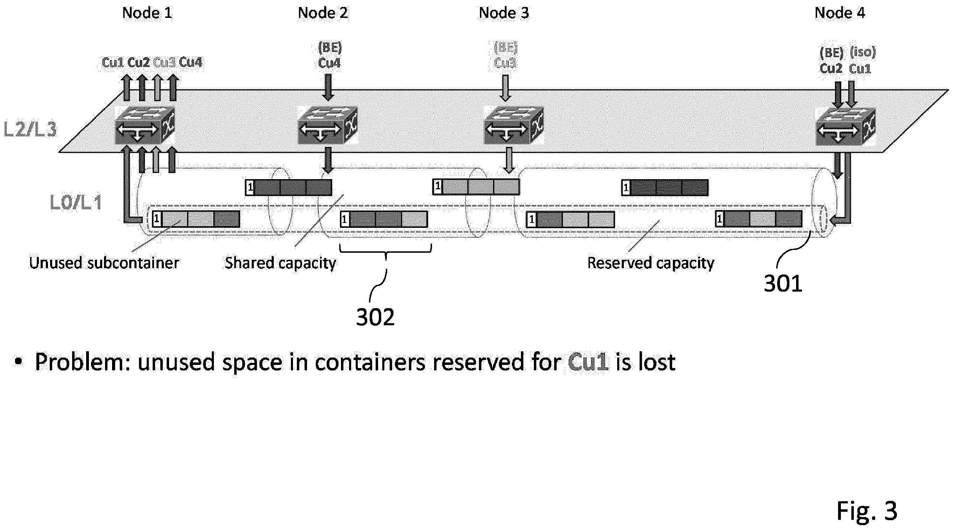

In today's transport networks, capacity reserved for a client connection is a closed physical layer pipe between a source transport node and a destination transport node. However, this pipe belongs to exactly this client and cannot be accessed by other customers along its path. **Fig. 3** schematically illustrates an example of a network with reserved connection. The network is shared by non-reservation customers cu2 - cu4 and by reserved-connection customer cu1. As shown in **Fig. 3****,** pipe **301** is reserved for customer cu1 for transmitting the client signal of cu1 from node 4 to node 1 using containers **302.** In general, the pipe **301** reserved for cu1 cannot be accessed by customers 3 and 4 at intermediate nodes 3 and 2 which are regarded as transit nodes for cu1. It should be also noted that the client signal includes both data symbols and idle symbols, and the idle symbols occupying corresponding space may form wasted idle subcontainers in the containers **302.** Hence, such unused capacity cannot be made available to other clients at transit nodes, and the unused space in containers **302** reserved for cu1 is lost (by wasting transport capacity with idle subcontainers). Accordingly, the spare capacity which is held ready for protection represents stranded bandwidth during normal operation.

Thus, there is a need to re-circulate the capacity reserved for protection, in particular, for protection on the electronical layer which is applicable to the respective above mentioned scenarios (e.g. LAG, ERP, load-sharing LAG etc.). Similar ineffective usage of network capacity can happen in other scenarios and network configurations, e.g. in case of a reserved connection without failure protection.

### Summary

In view of these needs, the present document proposes methods and devices for transmitting data packets in an optical transmission network with an improved flexibility and optimal usage of transmission resource, and in particular, to re-circulate stranded protection capacity in Ethernet transport networks.

An aspect of the disclosure relates to a method for transmitting a client stream through an optical transmission network. The optical transmission network typically comprises multiple nodes, such as a transmitting node which may be coupled with a client who generated or is associated with the client stream, a receiving node which may be a destination node to which the client stream is directed to, a switching node which may be located along a path which transmission of the client stream follows, and so on.

Furthermore, the client stream comprises at least one client packet and idle symbols. An example of such client stream is Ethernet traffic received at a client interface of the transmitting node. For example, the client stream may comprise one or more MAC packets which may contain e.g. header information, a preamble section and data symbols. In general, the client stream may be transmitted by synchronously placing the at least one client packet in one or more containers of the transmission network. In addition to the client packets further information related to the client packets such as header symbols or a preamble may be placed in the containers. A container may comprise a container header including address information, e.g. a destination address and a source address, and a sequence of subcontainers. In particular, the one or more containers are routed through the network based on the address information in container headers. For example, the container(s) may be routed according to the destination address so that the container(s) can reach a destination node associated with the destination address. In addition, the subcontainers include subcontainer headers and payload portions.

According to the disclosure, the method comprises obtaining the client stream at a client interface. The client interface may be included in a node of the optical transmission network, e.g. a transmitting node, and is generally coupled to a client who is associated with the client stream. Further, the method comprises inserting the client stream in one or more payload portions of subcontainers. For example, the at least one client packet and the idle symbols of the client stream may be inserted or encapsulated in the payload portion(s) of subcontainers. By this way, the subcontainer payload portion(s) comprise data symbols of the at least one client packet and/or idle symbols. More specifically, a subcontainer payload portion may comprise data symbols of the at least one client packet or idle symbols, or a mixture of data symbols and idle symbols.

According to the disclosure, the method also comprises determining whether a subcontainer payload portion only comprises idle symbols. If a subcontainer payload portion only comprises idle symbols, the method further comprises marking the subcontainer as idle subcontainer to make the idle subcontainer available for transport of another client stream or streams. The marking of an idle subcontainer may be in the header of the subcontainer or at some other place in the respective container that includes the idle subcontainer. For example, the marking may be in a container header or in headers of other subcontainers that precede or follow the idle subcontainer. On the other hand, if a subcontainer payload portion only comprises data symbols or comprises a mixture of data symbols and idle symbols, the subcontainer may remain unchanged or may be marked as busy/occupied subcontainer indicative of not being available for transport of another client stream. The determination may be performed for the sequence of subcontainers of the one or more containers, and, subsequently, the method comprises transmitting the one or more containers on an interface of the optical transmission network. The interface may also be included in the node of the optical transmission network, e.g. a transmitting node, and the one or more containers carrying the client stream may be sent/output from the node to the optical transmission network for transport through the interface.

In detail, the method may comprise determining whether an idle subcontainer is identified/determined. If an idle subcontainer is determined, the method may further comprise, prior to transmitting, skipping the idle subcontainer and moving a subsequent subcontainer (which contains content that may have been generated after the idle symbols included in the idle subcontainer) to the position of the idle subcontainer in the container. However, the method may comprise maintaining the idle marking for this subcontainer, so that the destination node of the container can identify the skipped idle subcontainer and insert the skipped idle symbols in the recovered client stream. The marking of an idle subcontainer may be in the header of the subcontainer that, due to moving forward in the subcontainer sequence, is in place of the skipped subcontainer. For example, a skipped idle subcontainer counter is provided in subcontainer headers to indicate the number of preceding idle subcontainers that have been skipped in the subcontainer sequence before the present subcontainer. In this case, a zero value in the skipped idle subcontainer counter indicates that no subcontainer has been skipped, and a one value indicates that one subcontainer in the sequence has been skipped before the present subcontainer, etc. In the same way, an idle subcontainer can be signaled in the header of a subcontainer that precedes the skipped idle subcontainer. By this way, a skipped idle subcontainer can be identified at the destination node and the corresponding skipped idle symbols can be inserted properly. It is therefore appreciated that the number of inserted idle symbols can be precisely determined to enable perfect recovery of client streams.

In other words, the idle subcontainer in slot number "i" in the sequence of subcontainers is omitted and the subsequent subcontainer number "i+1" is moved to slot number "i", and all following subcontainers k with k > i+1 are moved forward by one slot. This procedure may be repeated for all idle subcontainers so that all idle subcontainers are removed from the container(s) and the client stream is compressed.

In some embodiments, a container header may comprise container occupancy information indicative of the container space occupied by subcontainers. Alternatively, a container header may comprise container occupancy information indicative of free container space (i.e. the container space which is not occupied by subcontainers). As mentioned above, an idle subcontainer may be skipped in the sequence of subcontainers, and a subsequent subcontainer may be moved to its position, which results in a free subcontainer at the end of the container (i.e. compression effect). Accordingly, the container occupancy information may be updatd to account for the free space provided by the free subcontainer. In some embodiments, the subcontainer headers may comprise a free/occupied field to indicate whether the payload portion of a subcontainer is filled with client data. Accordingly, the number of the skipped idle subcontainer associated with the free/occupied field included in the subcontainer headers can be identified by the free/occupied field included in the subcontainer headers at the destination node.

In some embodiments, the one or more subcontainer payload portions may comprise forward error correction (FEC) information associated with the data in the payload portion(s) (which may contain a part of a client packet, or one or more client packets) to protect the at least one client packet against transmission errors. Furthermore, a container header may also comprise FEC information associated with information included in the container header to protect the information related to the container header against transmission errors.

Configured as above, by marking the idle subcontainer(s) which only contain idle symbols, the space occupied by the idle subcontainer(s) (including only idle symbols) can be set free and reused for transmission of further client packets and thus for transport of other client streams. In particular, the proposed solution, which compresses a container by skipping the idle subcontainers, provides free subcontainers at the end of a container (i.e. the free container space is located at the end of the container) and provides a packet transport which is highly compatible with the existing media access mechanism. As such, free container capacity (at the end of the container) can be used more effectively and can be made available for any other clients along the path through the optical transmission network.

Another aspect of the disclosure relates to a method for receiving a client stream comprising at least one client packet via an optical transmission network. The receiving method may be applicable to receive a client stream which has been transmitted using the transmitting method as indicated above. In general, the optical transmission network comprises multiple nodes, including e.g. a transmitting node which may be coupled with a client who generated or is associated with the client stream, a receiving node which may be a destination node to which the client stream is directed to, and a switching node which may be located along a path which transmission of the client stream follows.

In particular, the at least one client packet has been synchronously placed in one or more containers. Similar to the above mentioned embodiments, a container may comprise a container header including address information, such as a destination address and a source address, and a sequence of subcontainers. The one or more containers are routed through the network based on the address information in container headers. For example, the container(s) may be routed according to the destination address so that the container(s) can reach a destination node associated with the destination address. In addition, the subcontainers include subcontainer headers and payload portions.

According to the disclosure, the method comprises receiving the one or more containers at an interface of the optical transmission network. The one or more containers may have been processed to encapsulate the client stream according to the aforementioned transmitting method (e.g. compressed containers having free space or containing further client packets at the end of the containers). The interface may be included in a node of the optical transmission network, e.g. a receiving node, and the one or more containers carrying the client stream may be received/input from the optical transmission network to the node through the interface. Further, the method comprises extracting the at least one client packet from one or more subcontainer payload portions of the received containers, in particular, extracting the at least one client packet which has been inserted or encapsulated in the payload portion(s) of subcontainers. By this way, the at least one client packet can be recovered from the container(s) to obtain a recovered client stream. It is noted that the subcontainer payload portion(s) of the received containers may comprise data symbols of the at least one client packet. More specifically, a subcontainer payload portion may comprise data symbols of the at least one client packet or a mixture of data symbols and idle symbols. As mentioned above, idle subcontainers only containing idle symbols may have been skipped in the containers.

According to the disclosure, the method also comprises determining whether a subcontainer is marked as idle subcontainer. Similar to the above mentioned transmitting method, a subcontainer may have been marked if its subcontainer payload portion only included idle symbols. Besides, the idle symbols may have been skipped, but the idle marking for this subcontainer may be maintained for identification. According to this, if a subcontainer is marked as idle subcontainer, the method further comprises inserting one or more idle symbols in a recovered client stream. The number of the idle symbols to be inserted corresponds to the known number of the idle symbols contained in the skipped idle subcontainer. On the other hand, if a subcontainer is not marked as idle subcontainer (e.g. if a subcontainer is marked as busy/occupied subcontainer as mentioned above), no idle symbols may be inserted in a recovered client stream. The determination may be performed over the sequence of subcontainers for the one or more containers. Subsequently, the method comprises outputting the recovered client stream at a client interface. The client interface may be also included in the node (e.g. a receiving node), and is generally coupled to a client destination to which the client stream is directed to.

According to some embodiments, the subcontainer headers may comprise a skipped idle subcontainer counter. The skipped idle subcontainer counter may be associated with a marked idle subcontainer and can be used for identifying the idle subcontainer having contained only idle symbols. In detail, the skipped idle subcontainer counter may indicate a number of preceding idle subcontainers that only contained idle symbols and have been skipped in the subcontainer sequence before the present subcontainer (that is associated with the subcontainer header within which a skipped idle subcontainer counter is presently read). With information provided by the skipped idle subcontainer counter, the method may further comprise identifying the number of preceding idle subcontainers indicated in a subcontainer header of a received container. By this way, the skipped idle subcontainers can be easily identified, and a required number of idle symbols can be added to the client packet(s) properly to efficiently recover the client stream.

More specifically, the method may further comprise inserting one or more idle symbols between two consecutive extracted client packets in the recovered client stream. For example, a number of idle symbols may be inserted between the two consecutive extracted client packets in case that one or more skipped idle subcontainers are identified between the two client packets. In particular, the number of the idle symbols to be inserted is determined based on the identified number of preceding idle subcontainers that is indicated by the subcontainer header associated with the succeeding one of the two consecutive extracted client packet. More specifically, the number of the idle symbols to be inserted may correspond to the number of the idle symbols contained in an idle subcontainer multiplied by the identified number of preceding idle subcontainers. Accordingly, client streams can be successfully retrieved from compressed containers where idle symbols have been removed to provide free space in the containers for transport of further client packets (streams).

Configured as above, by identifying the skipped idle subcontainer(s) and correspondingly adding idle symbols to the extracted client packet(s), client streams including client packets and idle symbols can be well recovered, which enables efficient re-circulation of free container capacity for transmitting other client streams along the path through the optical transmission network. In particular, according to the proposed method, the same number of idle symbols as compressed in the sender can be directly inserted in the client stream without being subject to clock differences between the Ethernet interface of the sender and the Ethernet interface of the receiver. Since the information regarding the number of preceding skipped idle symbols is transmitted together with the packets, clock information to be transmitted can be preserved and clock synchronization can be thus remained throughout the network.

Another aspect of the disclosure relates to a method for transmitting a client stream comprising at least one client packet through an optical transmission network. The transmitting method may be applicable to further transmit a client stream which has been transmitted using the aforementioned transmitting method, and which is to be received using the aforementioned receiving method. As mentioned above, the optical transmission network comprises multiple nodes, including, for example, a transmitting node which may be coupled with a client who generated or is associated with the client stream, a receiving node which may be a destination node to which the client stream is directed to, and a transit or switching node which may be located along a path which transmission of the client stream follows. According to the disclosure, the transmitting method may take place at, for example, a switching node of the optical transmission network.

In particular, at least one client packet has been synchronously placed in one or more received containers. Similar to the above mentioned embodiments, a container may comprise a container header including address information, such as a destination address and a source address, and a sequence of subcontainers. The one or more containers are routed through the network based on the address information in container headers. For example, the container(s) may be routed according to the destination address so that the container(s) can reach a destination node associated with the destination address. In addition, the sequence of subcontainers include subcontainer headers and payload portions. Moreover, the one or more containers may be transported using a protected path which has capacity reserved for a client entity associated with the client stream. In other words, the one or more containers may be reserved for the client entity associated with the client stream.

According to the disclosure, the method comprises receiving the one or more containers at an interface of the optical transmission network. The interface may be included in a node of the optical transmission network, e.g. a switching node, and the node is also coupled to a further client entity who may wish to transmit a further client stream via the optical transmission network (i.e. the further client stream may be associated with the further client entity coupled with the node). Similar to the client stream, the further client stream may be encapsulated in its own container(s) to be routed to a destination based on the corresponding address information. The node may be located along a transmission of the client stream, and the at least one client packet of the client stream may thus pass the node during transmission. That is, the node may be regarded as a transit node for the one or more containers reserved for the client entity.

As indicated above, the one or more containers may have been processed to encapsulate the client stream according to the aforementioned transmitting method (e.g. compressed containers having free space or containing further client packets at the end of the containers). In this case, a subcontainer header may include information whether a subcontainer at the same position in the subcontainer sequence at the transmitting node was an idle subcontainer that has been skipped by the transmitter of the container.

According to the disclosure, the method comprises determining whether at least one free subcontainer is available in a received container for transport of a further client stream locally received at the switching node. The further client stream may particularly comprise at least one further client packet directed to the destination node of the received container. In more detail, the node may determine whether the further client packet is directed to the destination node of the received container by comparing the address information of the respective container(s) for the client packet(s) and address information of the further client packet(s). If at least one further client packet is directed to the destination node of the received container(s), the method comprises inserting the at least one further client packet in the available at least one free subcontainer of the one or more received containers.

Subsequently, the method also comprises transmitting the received and supplemented as explained above one or more containers on an interface of the optical transmission network to a further node. The interface may also be included in the node, e.g. the switching node, and the one or more containers carrying the client stream and the further client stream may be sent/output from the node to the optical transmission network for transport through the interface.

In some embodiments, the method may also comprise updating the container headers of the one or more received containers to include updated occupancy information based on the at least one further client packet. For example, the updated occupancy information may indicate that the at least one further client packet has been inserted in the container by updating the length of the occupied/free subcontainers in the container. Moreover, in order to protect the information related to the container header and/or the client packet(s) against transmission errors, forward error correction (FEC) information may be added to the container header and/or the subcontainer payload portion(s). In some embodiments, the method may further comprise updating the FEC information included in the subcontainer payload portion(s) associated with the at least one client packet based on the at least one client packet and the inserted at least one further client packet. In some embodiments, the method may also comprise determining whether the destination node of the one or more received containers is reached and forwarding the client packet to the further client entity coupled with the node in case that the destination node of the one or more received containers is reached.

Configured as above, other client streams associated with the other clients coupled to the transit nodes for the container(s) can be transported together with the client stream in the container(s) that is/are reserved for the client entity, thereby allowing effective utilization of the reserved capacity and reducing bandwidth waste in the protection path. Advantageously, the proposed method enables an aggregation of multiple client packets (e.g. Ethernet data packets or IP data packets) of different source nodes in a container and also enables to include further client packets received at an intermediated node into the container without completely decoding the container for inserting the packets at the node, thereby providing high compatibility with the current access media mechanism.

An aspect of the disclosure relates to an optical transmitting node for transmitting a client stream comprising at least one client packet through an optical transmission network comprising multiple nodes. The optical transmitting node may configured to perform the above mentioned transmitting method. In particular, the optical transmitting node may be configured to transmit the client stream by synchronously placing the at least one client packet in one or more containers that are routed through the network based on address information in container headers. Typically, a container comprises a sequence of subcontainers having subcontainer headers and payload portions. The optical transmitting node comprises a client interface and a processing unit. The client interface is configured to obtain the client stream associated with a client entity coupled with the client interface. In particular, the client stream may comprise the at least one client packet and idle symbols.

According to the disclosure, the processing unit is configured to insert the client stream in one or more payload portions of subcontainers. Also, the processing unit is configured to determine whether a subcontainer payload portion only comprises idle symbols. Similar to the transmitting method, the processing unit may be configured to mark the subcontainer as idle subcontainer, in case that a subcontainer payload portion only contains idle symbols, to make the idle subcontainer available for transport of another client stream. In addition, the optical transmitting node further comprises an optical output interface coupled with the optical transmission network. The optical output interface is configured to transmit the one or more containers through the optical transmission network.

According to the disclosure, if an idle subcontainer is determined, the processing unit may be further configured to skip the idle subcontainer and move a subsequent subcontainer to the position of the idle subcontainer in the container but maintain the idle marking for this subcontainer. Moreover, a skipped idle subcontainer counter may be provided in subcontainer headers to indicate the number of preceding idle subcontainers that have been skipped in the subcontainer sequence before the present subcontainer. Optionally, the one or more subcontainer payload portions may comprise forward error correction (FEC) information associated with the data in the subcontainer payload portion(s) which may contain a portion of a client packet or one or more client packets.

According to some embodiments, a container header may comprise container occupancy information indicative of the container space occupied by subcontainers or of free container space. In particular, an idle subcontainer is skipped in the sequence of subcontainers and a subsequent subcontainer is moved to its position so that a free subcontainer at the end of the container results and the container occupancy information is updated to account for the free space provided by the free subcontainer.

Accordingly, the proposed optical transmitting node adapts transport containers to make free space thereof available by removing idle symbols and marking skipped idle subcontainers accordingly (which can be regarded as compression of data in the containers). It is appreciated that the free space made available through the compression effect can be reused by other client packets, especially by further client packets received at transit nodes for the containers.

Another aspect of the disclosure relates to an optical receiving node for receiving a client stream comprising at least one client packet via an optical transmission network comprising multiple nodes. In particular, the at least one client packet has been synchronously placed in one or more containers that are routed through the network based on address information in container headers. As mentioned, a container in general comprises a sequence of subcontainers having subcontainer headers and payload portions.

According to the disclosure, the optical receiving node comprises an optical input interface coupled with the optical transmission network. The optical input interface may be configured to receive the one or more containers. The optical receiving node also comprises a processing unit and a client interface. The processing unit is configured to extract the at least one client packet from one or more subcontainer payload portions of the received containers. The processing unit is further configured to determine whether a subcontainer is marked as idle subcontainer and insert one or more idle symbols in a recovered client stream in case that a marked idle subcontainer is determined. The client interface is configured to output the recovered client stream. It is noted that marking of a subcontainer as idle subcontainer may have been carried out by the transmitter in a header of the idle subcontainer or in a subcontainer header of a subsequent subcontainer to a skipped idle subcontainer. For example, a skipped idle subcontainer counter in a subcontainer header indicates how many previous subcontainers in the subcontainer sequence have been skipped before the present subcontainer by the transmitter

According to the disclosure, the subcontainer headers may comprise a skipped idle subcontainer counter which indicates a number of preceding idle subcontainers that only contained idle symbols and have been skipped in the subcontainer sequence before the present subcontainer before the containers have been transmitted. In some embodiments, the processing unit may be further configured to identify the number of preceding idle subcontainers indicated in a subcontainer header of a received container. In some embodiments, the optical receiving node may further comprise an idle subcontainer buffer configured to provide the one or more idle symbols to be inserted in the recovered client stream. In particular, the processing unit may be further configured to receive one or more idle symbols from the idle subcontainer buffer and insert them between two consecutive extracted client packets in the recovered client stream. It is appreciated that a number of the idle symbols to be inserted may be determined based on the identified number of preceding idle subcontainers that is indicated by the subcontainer header associated with the succeeding one of two consecutive extracted client packet.

Accordingly, the proposed optical receiving node identifies the skipped idle subcontainer(s) and adds an appropriate number of idle symbols to the extracted client packet(s), which enables reliable recovery of the client stream (which contains client packets and idle symbols) and therefore allows to efficiently re-circulate free container capacity for transmitting other client streams along the path through the optical transmission network.

Another aspect of the disclosure relates to an optical switching node for transmitting a client stream comprising at least one client packet through an optical transmission network comprising multiple nodes. As indicated above, the at least one client packet has been synchronously placed in one or more containers that are routed through the network based on address information in container headers. Also, a container comprises a sequence of subcontainers having subcontainer headers and payload portions, and a subcontainer header including information whether a subcontainer at the same position in the original subcontainer sequence was an idle subcontainer that has been skipped in the received sequence of subcontainers.

According to the disclosure, the optical switching node comprises an optical input interface coupled with the optical transmission network and configured to receive the one or more containers. Moreover, the optical switching node comprises a client interface coupled with a further client entity associated with the further client stream. In particular, the client interface is configured to receive a further client stream comprising at least one further client packet directed to the destination node of the received container. The optical switching node further comprises a processing unit configured to determine whether at least one free subcontainer is available in a received container for transport of the further client stream and to insert the at least one further client packet in the available at least one free subcontainer of the one or more received containers. In addition, the optical switching node comprises an optical output interface coupled with the optical transmission network and configured to transmit the one or more containers to a further node.

In some embodiments, the processing unit may be further configured to update the container headers of the one or more received containers to include updated occupancy information based on the at least one further client packet. In some embodiments, it is appreciated that the one or more containers may be reserved for a client entity associated with the client stream. It is further appreciated that the further client stream may be associated with the further client entity coupled with the optical switching node.

Accordingly, the proposed optical switching node adds a further client stream to the free space of the reserved container(s), which provides a flexible mechanism to be adapted to the existing multipoint-to-point systems. In particular, client packets of different source nodes can be transported using a reserved capacity without significant modification of the current media access mechanism.

It will be appreciated that method steps and device features may be interchanged in many ways. In particular, the details of the disclosed devices can be implemented as a method, as the skilled person will appreciate.

### Brief Description of the Figures

Embodiments of the disclosure are explained below in an exemplary manner with reference to the accompanying drawings, wherein
**Fig. 1** schematically illustrates a sample scenario in which 2 ERP customers with reservation and other customers without reservation share a transport network ring;
**Fig. 2** schematically illustrates a sample LAG scenario;
**Fig. 3** schematically illustrates an example of network with reserved connection;
**Fig. 4** schematically illustrates a possible structure of a client stream 400 for transport through an optical transmission network according to embodiments of the disclosure;
**Fig. 5** schematically illustrates a possible structure of a container **500** for transport through an optical transmission network according to embodiments of the disclosure;
**Fig. 6** schematically illustrates an example architecture of an optical transmission network **600** according to embodiments of the disclosure;
**Fig. 7** schematically illustrates a possible implementation of container compression according to embodiments of the disclosure;
**Fig. 8** illustrates processing steps for the proposed method for transmitting a client stream through an optical transmission network according to embodiments of the disclosure;
**Fig. 9** illustrates processing steps for the proposed method for receiving a client stream through an optical transmission network according to embodiments of the disclosure; and
**Fig. 10** graphically illustrates theoretical analysis of the saved/re-circulated capacity using the proposed methods and devices according to embodiments of the disclosure.

### Detailed Description

A basic aspect in this disclosure comprises methods and devices which allow to build containers for long-distance transport, whose unused capacity can be used by downstream nodes. In particular, the disclosed solution provides a transport/access mechanism which reuses the spare capacity in containers that is reserved for protection in case of failure conditions, so that stranded bandwidth is minimized during normal operation. In the following, embodiments of the methods for transmitting and receiving client streams through an optical transmission network as well as the corresponding devices (e.g. the respective nodes included in the optical transmission network) are described in detail.

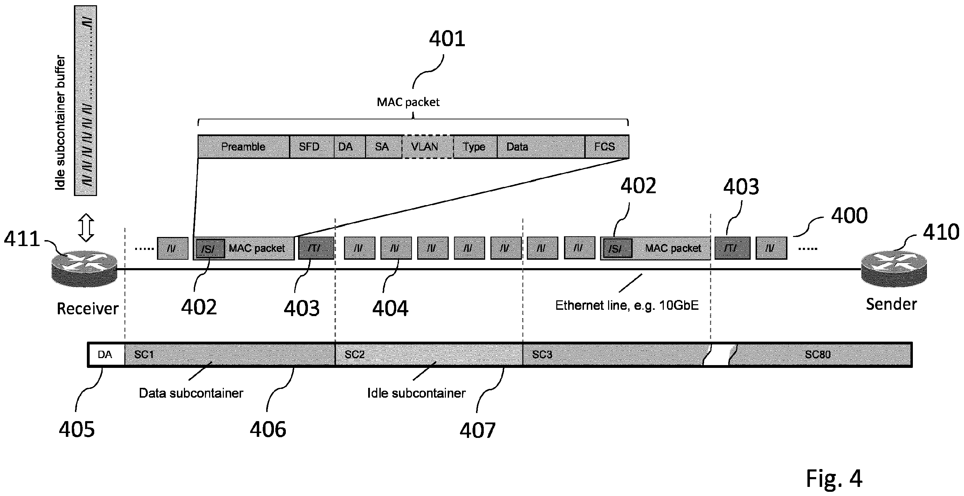

**Fig. 4** schematically illustrates a possible structure of a client stream **400** for transport through an optical transmission network according to embodiments of the disclosure. The optical transmission network can be, for example, SDH or OTN networks that reserve backup links using ERP or LAG scenarios as shown in **Fig. 1** and **Fig. 2****,** respectively. As illustrated, the client stream **400** is sent by a sender **410** and is received by a receiver **411,** and that is, the sender **410** and the receiver **411** can be regarded as an optical transmitting node and an optical receiving node in the optical transmission network, respectively.

The client stream **400** includes one or more client packets **401.** According to the embodiment, the one or more client packets can be an Ethernet packet (also referred as MAC packet) which has a frame structure as indicated by **401.** The skilled person will appreciate that an Ethernet frame within an Ethernet packet may include a preamble section, start frame delimiter (SFD) marking the end of the packet preamble, destination MAC address (DA), source MAC address (SA), EtherType for indicating the protocol encapsulated in the payload (Data) of the frame and a frame check sequence (FCS). These information (e.g. header and preamble) may be regarded as data (data packets) and represented by data symbols. Furthermore, Ethernet interfaces continuously transmit idle symbols (/I/) **404** when they have no data to send, while data packets (e.g. Ethernet MAC packets) are bordered by start (/S/) symbols **402** and termination (/T/) symbols **403.** As shown, the first byte of the preamble section of the MAC packet may be converted into a /S/ symbol **402.**

For example, symbol information (i.e. a symbol stream) is transferred from the sender **410** (e.g. an optical Ethernet (OE) client at a transmitting node) to the receiver **411** (e.g. a client port in an OE access node at a receiving node) before block encoding (e.g. 64B/66B) and scrambling. Such a symbol stream can be observed e.g. across the 10 gigabit media-independent interface (XGMII) as defined in the IEEE 802.3 standard. In particular, OE maps this symbol sequence (stream) seamlessly into a synchronous stream of (sub-) containers reserved for this connection which provides the same bitrate as the client port (which may be referred as "encapsulation" processes). **Fig. 4** further illustrates the mapping of the symbol stream into a container, where a container comprises a container header **405** having a destination address and a plurality of subcontainers which may include data symbols and/or idle symbols of the client stream **400.** Among these subcontainers, a subcontainer which includes a data symbol may be referred as data subcontainer **406,** while a subcontainer which only contains idle symbols may be referred as idle subcontainer **407.** In general, this MAC-packet encoding and container aggregation may be performed at the physical-layer service interface.

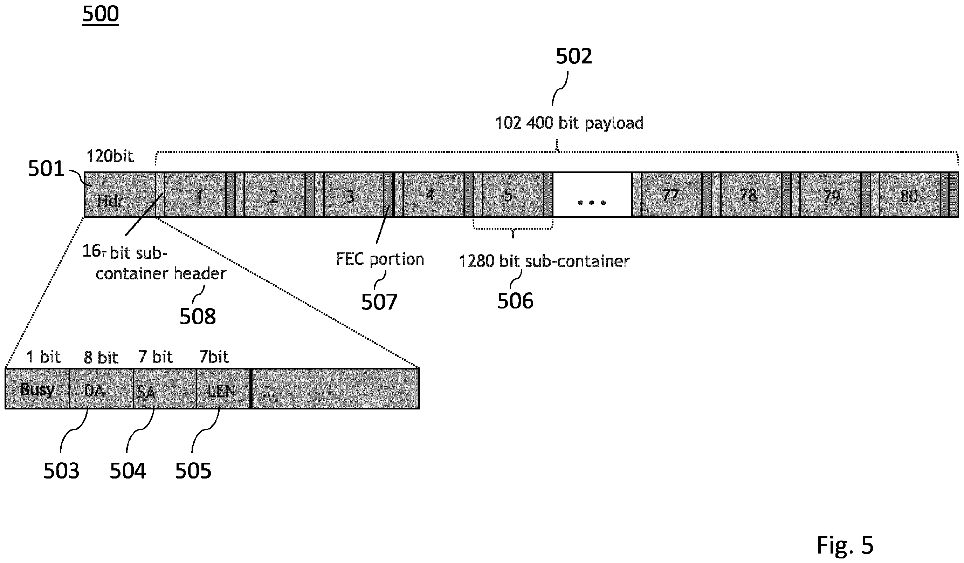

**Fig. 5** schematically illustrates a possible structure of a container **500** for transport through an optical transmission network according to embodiments of the disclosure. More specifically, the container **500** represents an OE container structure used for carrying the client packet(s) **401** of a client stream **400** as described in **Fig. 4****.** In other words, **Fig. 5** depicts a general view of encapsulation of a client stream (e.g. the client stream **400**) into a container **500** to be transmitted in the optical transmission network. The container **500** comprises a container header **501** and a container payload portion **502.** In order to save interface resources and processing resources at switching or routing nodes, the containers **500** transmitted between the nodes comprise a container header **501** which includes information regarding a destination node of the container **500.** In detail, the container header **501** may comprise address information such as destination address information **503** and source address information **504.** The source address information **504** indicates a source node from which data included in the container **500** that are associated with the source address information are sent. The destination address information **503** indicates that all data included in the container **500** are directed to a destination node (e.g. a receiving node or a switching node) associated with the destination address information **503.** When passing a certain node (e.g. a switching node), the destination address information **503** is analyzed in order to be able to decide whether client packets received at the switching node are directed to the destination node of the container and the client packets are included in the container **500** if the destination to which the client packets are directed to matches the destination node of the container.

Furthermore, the container header **501** may comprise container occupancy information **505** being indicative for the used/unused capacity of the container payload portion **502.** In case that the container payload portion **502** is segmented in a plurality of blocks **506** (e.g. a standard OE container is subdivided into 80 subcontainers as represented by subcontainers **406, 407**) having equal length, the container occupancy information **505** may indicate the number of occupied and/or free subcontainers **506.** Preferably, the container **500** may comprise a fixed payload portion capacity comprising a fixed number of subcontainers **506.** Thus, it may be sufficient to indicate either the number of occupied subcontainers **506** or the number of free subcontainers **506** in order to determine the used/unused capacity of the payload portion **502.**

Moreover, the container header **501** may comprise FEC information which may refer to the above indicated information included in the container header **501,** i.e. in case of transmission errors, the container header information (e.g. the destination address information **503,** source address information **504** and container occupancy information **505**) can be recovered by the FEC information. The FEC information may be applied to protect the container header information. Further FEC information may also be applied to protect the container payload. In other words, the container **500** is protected against transmission errors using a modular FEC configuration which applies header FEC information referring only to the container header **501** and payload FEC information referring only to the container payload portion **502.**

Accordingly, the above mentioned container header **501** is adapted to be decoded (e.g. in real-time) by an intermediated node (e.g. a switching node) arranged between the source node (e.g. a transmitting node) and the destination node (e.g. a receiving node) in order to determine the destination node and the free capacity of the container **500.** Depending on the container header information, the intermediate node is able to determine whether client packets received at the intermediate node from a client entity (e.g. a router) for transmission via the optical transmission network to the destination node should be included in the container **500,** and whether free capacity of the container payload **502** is sufficient for transmitting at least a portion of the client packets.

It is further noted that, similar to the structure of a container, the plurality of subcontainers in a container also include a FEC portion **507,** a subcontainer header **508** and payload portion. According to a standard OE container as described in the embodiments, each of the subcontainers includes a subcontainer header **508** having a size of 2 byte to indicate, for example, whether the payload portion of subcontainer is filled with client data. Besides, the subcontainer payload portion may include the FEC portion associated with the data in the subcontainer payload portion (e.g. a part of a client data packet or one or more client data packets).

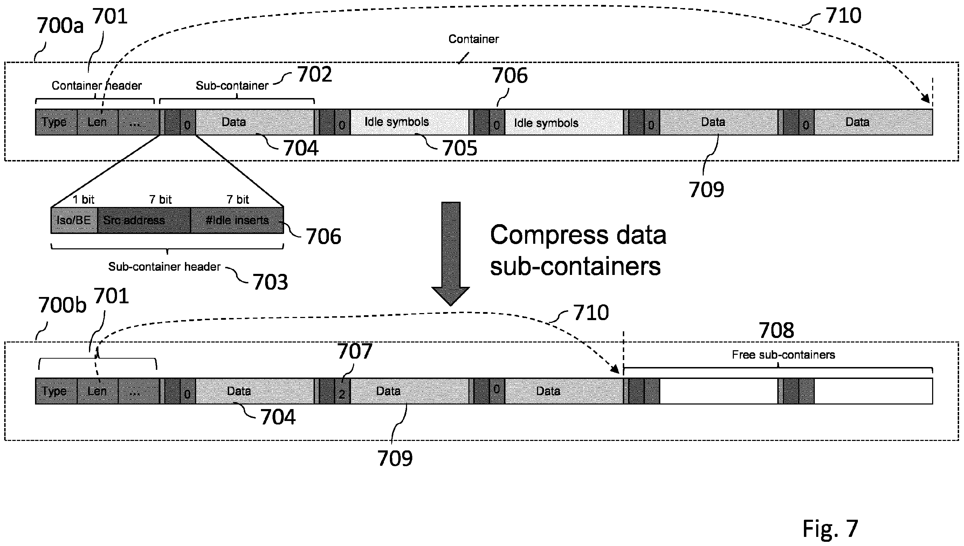

According to the disclosure, a compression process may be performed to a container (i.e. the subcontainers containing data) before transmission. **Fig. 7** schematically illustrates a possible implementation of container compression according to embodiments of the disclosure. For example, the compress process can be performed to the container **500** comprising the plurality of subcontainers **506. 700a** represents an uncompressed container (before compression) which has similar structure as illustrated in **Fig. 4****,** comprising a container header **701** and a payload portion divided into a plurality of subcontainers **702.** As mentioned, each subcontainer **702** includes a subcontainer header **703** and a subcontainer payload portion which may have data symbols associated with the client packet(s) and/or idle symbols. Here, a subcontainer which includes a data symbol may be referred as data subcontainer **704,** while a subcontainer which only contains idle symbols may be referred as idle subcontainer **705.** In some embodiments, the container **700a** may be reserved in a protection path for a certain client entity.

In particular, the subcontainers may have a header field **706** used to encode the number of preceding idle subcontainers. While the container is filled with the client stream subcontainer by subcontainer, a subcontainer only containing /I/ symbols is marked as idle (i.e. an idle subcontainer) in the header field **706** of the subcontainer header. By this way, the content of the subcontainer can be conveyed by a number representation (i.e. a number of idle subcontainers), and free space of a container can then be identified (by e.g. a length field in the container header) and overwritten by other clients of a sender transport node or by clients of transit transport nodes, as long as the other clients have traffic to the same destination as the client for whom the container is reserved (i.e. the destination transport node of the reserved connection). As mentioned above, the container destination may be provided in the destination address field of the container header **701** indicated by **405, 501.** Also, the occupancy information field of the container header **701** (denoted as a length field, LEN) may indicate the length (number) of occupied subcontainers or free subcontainers by pointing to the last occupied subcontainer in the container (as represented by arrow **710**) close to the end of the container. By this way, OE containers carry information about their fill level in the container header **701.**

It is noted that the length field (LEN) in the container header **701** indicates the number of contiguous, occupied subcontainers inside the container starting from the beginning of the payload section. For example, LEN is normally smaller than 80, which means that there are 80-LEN free subcontainers at the end of the container. However, in the reality, a reserved container comprises idle subcontainers which are typically not contiguous, but are rather distributed across the container with data subcontainers in between. In principle, the OE container header can also carry a map of subcontainer reservation state, but the map may require 1 bit for each subcontainer, which leads to more than twice the current header size. The increasing size in a container header results in a challenge for the real-time processing of containers in transit nodes. A solution proposed according to the disclosure is illustrated by the compressed container **700b** (after compression).

In detail, if a subcontainer payload portion only includes idle symbols, the subcontainer is marked as idle subcontainer as indicated by **705** of **700a.** In this case, a subsequent data subcontainer **709** is moved to the position of the idle subcontianer **705** but the idle marking is maintained. For example, the data subcontainer **709** indicates (as shown by the subcontainer header **707**) two preceding idle subcontainers and has been moved up to the position right after the data subcontainer **704** to achieve contiguous subcontainer occupation. Accordingly, the subcontainers containing data (the data subcontainers) of the container **700b** are compressed so that free subcontainers **708** are available at the end of the container **700b.** Similar to the container **700a**, the length field in the container header of the container **700b** thus indicates the length of occupied subcontainers or free subcontainers pointing to the last occupied subcontainer in the container. As such, by encoding each subcontainer header with the number of idle subcontainers to be expanded in the receiver, the receiver can revert the compression by easily inserting the respective number of idle subcontainers in the outgoing client stream (signal) before the respective subcontainer.

It is appreciated that FEC encoding and in-flight boarding may also be applied to the compressed container, i.e. by applying FEC information associated with the client packets to the subcontainer payload portions. Further, the receiver can directly insert indicated number of idle subcontainers into outgoing client streams, which provides full compatibility with the existing media access mechanism. Advantageously, the compression of data subcontainers does not interfere with proprietary use of preamble space or inter-packet gap.

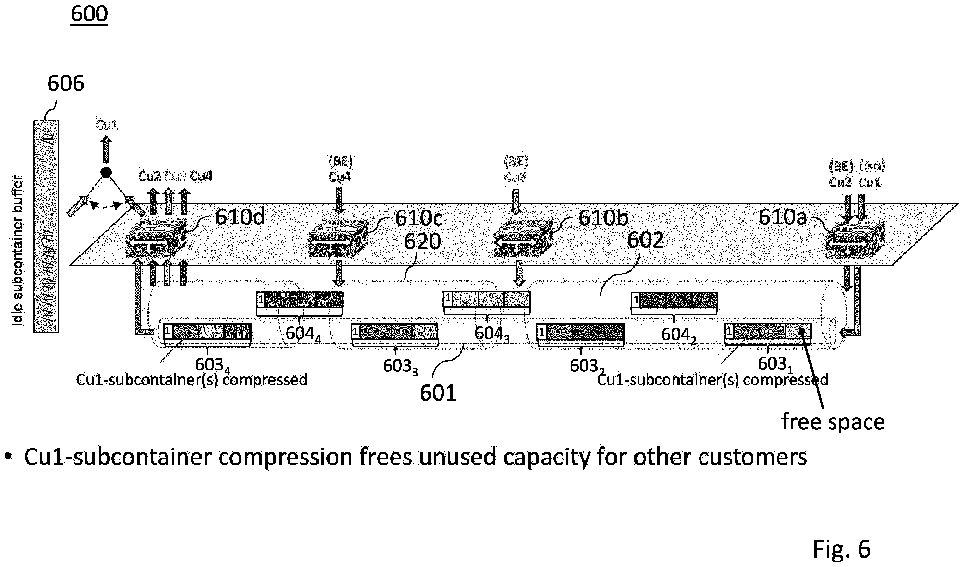

**Fig. 6** schematically illustrates an example architecture of an optical transmission network **600** according to embodiments of the disclosure. The architecture comprises multiple nodes **610a**, **610b, 610c, 610d** which are interconnected by optical transmission links **620.** The optical transmission links **620** may be optical fibers. The optical transmission network can be, for example, SDH or OTN networks that reserve backup links using ERP or LAG scenarios as shown in **Fig. 1** and **Fig. 2****,** respectively. In general, each node **110a**, **110b, 110c, 110d** or a subset of nodes **110a**, **110b, 110c, 110d** may comprise a switching element included in the optical transmission layer (L0/L1 according to OSI-model), i.e. may be coupled with one or more optical transmission links **620.** The respective switching element of the node **110a**, **110b, 110c, 110d** may be coupled with a switching or routing element included in an upper network layer (e.g. layers L2/L3 of the OSI-model). The switching or routing element may be coupled with a client entity and can be regarded as a client interface. On the other hand, the switching element coupled with the optical transmission links **620** can be regarded as an optical input/output interface. Data packets may be received at the switching or routing element (i.e. the client interface) from its corresponding switching element (i.e. the optical input/output interface). For example, client data packets may be routed by the optical input/output interface to the client interface in order to forward the client data packets to a client entity cu1, cu2, cu3, cu4 coupled with the client interface. In the opposite direction, the optical input/output interface may receive client data packets from a client entity cu1, cu2, cu3, cu4 in order to transmit the client data packets via the optical transmission network **600** to a destination node. The client interface then forwards the received data packets to the optical input/output interface in order to be transmitted via the one or more optical transmission links **620.**

According to the embodiments, a client entity cu1 (e.g. a server computer or a personal computer) coupled with the client interface of the node **610a** may generate Ethernet packets (i.e. client data) for transmission over the optical transmission network **600.** These Ethernet packets may be inserted by the node **610a** into a container as described above. Further, the client entity cu1 may receive Ethernet packets from the node **610a**. After transmission, the Ethernet packets are received in a container at a node being the destination of the container. For example, the node **610d** may determine whether the destination address indicated by the container header of the container match its address and may receive the container if the node **610d** is the destination node of the container.

As illustrated, the node **610a** obtains, at its client interface, a client stream from the client cu1 and inserts the client stream in one or more payload portions of subcontainers in the containers **603** to be transmitted through the network **600.** In particular, a portion of capacity **601** provided by the optical transmission links **620** may be reserved for the container **603** associated with the client cu1 at the node **610a**. The rest of the capacity **602** provided by the optical transmission links **620** is available for transport of other client streams associated with other client cu2, cu3, cu4. It is appreciated that the optical transmission network **600** may be adapted to support WDM, so that different clients cu1, cu2, cu3, cu4 may use multiple different wavelengths to transmit their client streams. Similar to the client stream of client cu1, the other client streams may also be inserted into respective containers as indicated by **604₂**, **604₃**, **604₄** to be transmitted using the rest of the link capacity **602.** Since the container **603** associated with the client cu1 is sent by the node **610a** and is received by the node **610d,** the node **610a** and the node **610d** can be regarded as an optical transmitting node and an optical receiving node in the optical transmission network, respectively. On the other hand, nodes **610b** and **610c,** accessible by the clients cu3 and cu4, respectively, may be regarded as transit/switching nodes for the container **603.**

In particular, the node **610a** may insert the client stream in the containers **603** according to the mechanism as described in **Fig. 7****.** In other words, the node **610a** may, through a processing unit thereof (e.g. a DSP), determine whether a subcontainer payload portion only has idle symbols and mark the subcontainer as idle subcontainer. Further, if an idle subcontainer is determined, the node **610a** may also skip the idle subcontainer and move a subsequent subcontainer to the position of the idle subcontainer in the container **603** but maintain the idle marking for this subcontainer. Accordingly, the idle subcontainer can be made available or the free space may be available at the end of the container **603** for transport of other client streams (as illustrated by the container **603₁**).

As a transit/switching node, nodes **610b** and **610c** receive, at their client interface, a further client stream associated with clients cu3 and cu4, respectively, and compare the address information of the container 603 for the client packets and the address information of further client packets included in the further client stream. The further client packets may be directed to the destination node of the container **603.** In this case, the nodes **610b** and **610c** also determine whether a free subcontainer is available in the container **603** or the free space is available at the end of the container **603** for transport of the further client stream. In this case, the nodes **610b** and **610c** further insert a part of a further client packet or the at least one further client packet in the available free subcontainer or the free space of the container **603.** As illustrated in **Fig. 6****,** container **603₁** still has a free subcontainer at the end of the container **603,** container **603₂** carries a portion or one or more of the client packets of the client cu2 at the end of the container together with a portion or one or more of the client packets of the client cu1 (as indicated in the last two subcontainers), container **603₃** carries the a portion or one or more of client packets of the client cu3 at the end of the container together with a portion or one or more of the client packets of the client cu1 (as indicated in the last one subcontainers), and container **603₄** carries a portion or one or more of the client packets of the clients cu3 and cu4 at the end of the container together with a portion or one or more of the client packets of the client cu1 (as indicated in the last two subcontainers). It is noted that the client packets or portions of the client packets carried in the container **603** have the same destination (e.g. the node **610d** as illustrated as a receiving node). Accordingly, subcontainers which are not used by the client cu1 can now be accessed by other clients cu2, cu3, cu4 giving them additional bandwidth.

To reconstruct the client signal in the receiver, the destination node **610d** has an idle subcontainer stored in a buffer **606** (e.g. an idle subcontainer buffer) to be inserted into the outgoing client stream whenever a subcontainer is received with the idle mark encoded. According to the embodiment, the destination node **610d** receives the containers **603** and extracts the client packets from the subcontainer payload portions of the containers **603.** The destination node **610d** further determines whether a subcontainer is marked as idle subcontainer and inserts one or more idle symbols provided by the buffer **606** in a recovered client stream. In particular, the subcontainer having a subcontainer header as shown in **Fig. 7** comprises a skipped idle subcontainer counter. The skipped idle subcotainer counter may indicate a number of preceding idle subcontainers that only contained idle symbols and have been skipped in the subcontainer sequence before the present subcontainer.

By this way, the node **610d** can identify the number of preceding idle subcontainers indicated in the subcontainer header of the containers **603.** As a result, idle times in Ethernet life traffic are identified and their corresponding transport capacity is set free for other users through re-circulating idle subcontainers of the reserved connection, while the guaranteed-bandwidth service for the contract user is not impaired.

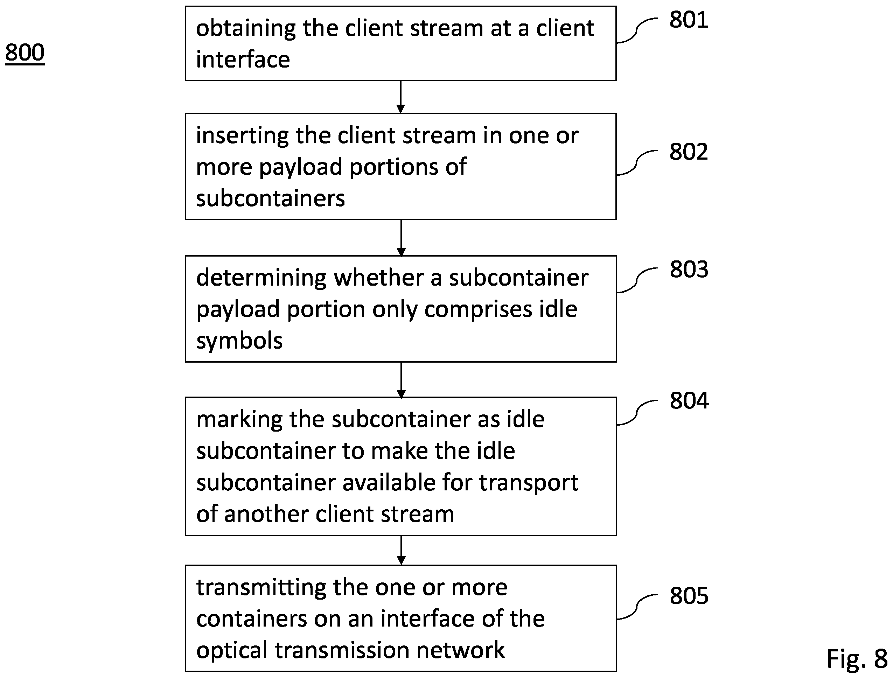

**Fig. 8** illustrates processing steps for the proposed method for transmitting a client stream through an optical transmission network according to embodiments of the disclosure. The method **800** can be implemented by, for example, the transmitting node **610a** as illustrated in **Fig. 6****.** The method **800** comprises obtaining (step **801**) the client stream at a client interface, the client stream comprising the at least one client packet and idle symbols and inserting (step **802**) the client stream in one or more payload portions of subcontainers. The method **800** also comprises determining (step **803**) whether a subcontainer payload portion only comprises idle symbols and in response, marking (step **804**) the subcontainer as idle subcontainer to make the idle subcontainer available for transport of another client stream. The method comprises transmitting (step **805**) the one or more containers on an interface of the optical transmission network.

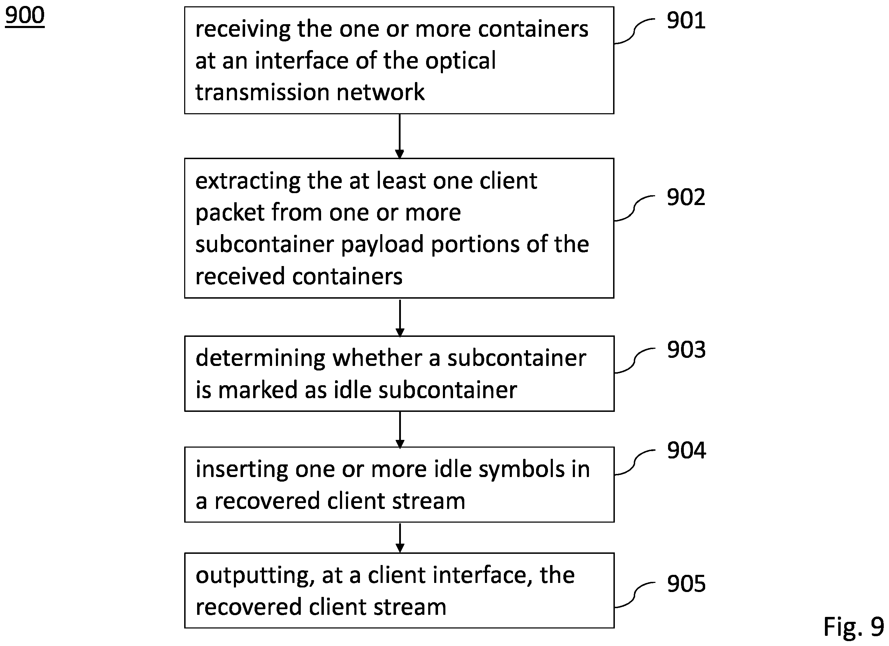

**Fig. 9** illustrates processing steps for the proposed method for receiving a client stream through an optical transmission network according to embodiments of the disclosure. The method **900** can be implemented to receive a client stream which has been transmitted using the method **900.** The method **900** can be implemented by, for example, the receiving node **610d** as illustrated in **Fig. 6****.** The method **900** comprises receiving (step **901**) the one or more containers at an interface of the optical transmission network and extracting (step **902**) the at least one client packet from one or more subcontainer payload portions of the received containers. The method **900** also comprises determining (step **903**) whether a subcontainer is marked as idle subcontainer and in response, inserting (step **904**) one or more idle symbols in a recovered client stream. The method comprises outputting (step **905**), at a client interface, the recovered client stream.

It should be noted that the device features described above correspond to respective method features that may be however not explicitly described, for reasons of conciseness. The disclosure of the present document is considered to extend also to such method features.

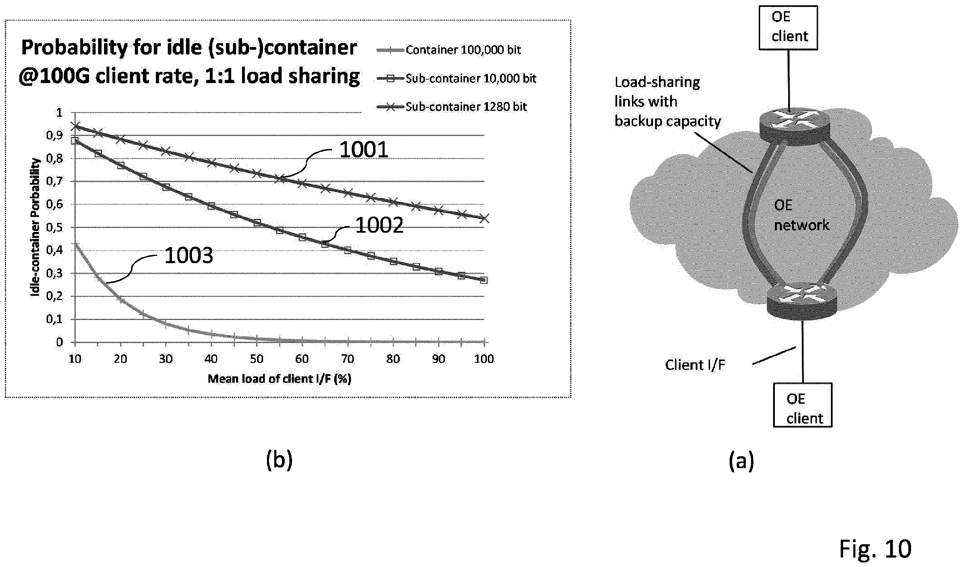

**Fig. 10** graphically illustrates theoretical analysis of the saved/re-circulated capacity using the proposed methods and devices according to embodiments of the disclosure. The analysis is done in a load-sharing LAG as illustrated in **Fig. 10(a)**, where a mean load of Poisson packet arrivals at an OE client interface of 100Gbps is assumed. This load is distributed by the OE access node 50% each across two disjoint paths of the load-sharing LAG. From the probability distribution function one can easily derive the probability for a packet inter-arrival time which is larger than or equal to the duration of a subcontainer. **Fig. 10(b)** shows probability for idle subcontainer over the mean load of the client interface at 100Gbps of client rate for a transmission in a 50% load-sharing LAG of **Fig. 10(a)**. Curve **1001** represents the result for an empty subcontainer of 1280 bits (which corresponds to the current OE design), curve **1002** represents the result for an empty subcontainer of 10,000 bits, and curve **1003** represents the result for a container of 100,000 bits. In general, saved capacity (which is represented by the idle-container probability) increases along with the decreased mean load of client interface. As shown by the curve **1001,** at a mean load of 100% of the client interface rate, the probability for an empty subcontainer of 1280 bits is around 50%, which means that the entire protection capacity can be re-circulated. Since the mean client load may typically be lower (e.g. 50% to 80%), one can expect even higher savings on the load-sharing links. In particular, the savings decrease with increasing subcontainer size (indicated by curves **1001** and **1002**) and become negligible for an entire container (indicated by **1003**).

As such, transport network providers can free the unused network capacity reserved for electronical protection and make it available for any other user along the path through the network. This can substantially reduce overall network capacity dimensioning. The mechanism is transparent for Ethernet symbol transfer, i.e. proprietary usage of preamble space or inter-frame gap is not affected, because only subcontainers completely filled with idle symbols are re-circulated, any other content is considered as user data. Furthermore, the mechanism is fully compatible with the existing OE design. It uses the same media access mechanism and does not require additional processing in transit nodes, which may be useful for any transport node supporting Ethernet clients in the Metro area.

It should be further noted that the description and drawings merely illustrate the principles of the proposed device. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

## Claims

1. A method for transmitting a client stream comprising at least one client packet through an optical transmission network comprising multiple nodes by synchronously placing the at least one client packet in one or more containers that are routed through the network based on address information in container headers, a container comprising a sequence of subcontainers having subcontainer headers and payload portions, the method comprising:
obtaining the client stream at a client interface, the client stream comprising the at least one client packet and idle symbols;
inserting the client stream in one or more payload portions of subcontainers;
determining whether a subcontainer payload portion only comprises idle symbols and in response, marking the subcontainer as idle subcontainer to make the idle subcontainer available for transport of another client stream; and
transmitting the one or more containers on an interface of the optical transmission network.

2. The method of claim 1, further comprising, prior to transmitting, if an idle subcontainer is determined, skipping the idle subcontainer and moving a subsequent subcontainer to the position of the idle subcontainer in the container but maintaining the idle marking for this subcontainer so that the destination node of the container can identify the skipped idle subcontainer and insert the skipped idle symbols in the recovered client stream.

3. The method of claim 2, wherein a skipped idle subcontainer counter is provided in subcontainer headers to indicate the number of preceding idle subcontainers that have been skipped in the subcontainer sequence before the present subcontainer.

4. The method of any of claims 2 - 3, wherein a container header comprises container occupancy information indicative of the container space occupied by subcontainers or of free container space, wherein an idle subcontainer is skipped in the sequence of subcontainers and a subsequent subcontainer is moved to its position so that a free subcontainer at the end of the container results and the container occupancy information is updatd to account for the free space provided by the free subcontainer.

5. The method of any of previous claims, wherein the subcontainer headers comprise a free/occupied field to indicate whether the payload portion of a subcontainer is filled with client data.

6. A method for receiving a client stream comprising at least one client packet via an optical transmission network comprising multiple nodes, wherein the at least one client packet has been synchronously placed in one or more containers that are routed through the network based on address information in container headers, a container comprising a sequence of subcontainers having subcontainer headers and payload portions, the method comprising:
receiving the one or more containers at an interface of the optical transmission network;
extracting the at least one client packet from one or more subcontainer payload portions of the received containers;
determining whether a subcontainer is marked as idle subcontainer and in response, inserting one or more idle symbols in a recovered client stream; and
outputting, at a client interface, the recovered client stream.

7. The method of claim 6, wherein the subcontainer headers comprise a skipped idle subcontainer counter which indicates a number of preceding idle subcontainers that only contained idle symbols and have been skipped in the subcontainer sequence before the present subcontainer.

8. The method of claim 7, further comprising inserting one or more idle symbols between two consecutive extracted client packets in the recovered client stream, wherein a number of the idle symbols to be inserted is determined based on the number of preceding idle subcontainers as indicated by the subcontainer header associated with the succeeding one of the two consecutive extracted client packet.

9. A method for transmitting a client stream comprising at least one client packet through an optical transmission network comprising multiple nodes, wherein the at least one client packet has been synchronously placed in one or more containers that are routed through the network based on address information in container headers, a container comprising a sequence of subcontainers having subcontainer headers and payload portions, a subcontainer header including information whether a subcontainer at the same position in the subcontainer sequence was an idle subcontainer that has been skipped by a sender of the container, the method comprising:
receiving, at a node, the one or more containers at an interface of the optical transmission network;
determining, at the node, whether at least one free subcontainer is available in a received container for transport of a further client stream comprising at least one further client packet directed to the destination node of the received container;
inserting the at least one further client packet in the available at least one free subcontainer of the one or more received containers; and
transmitting the received one or more containers on an interface of the optical transmission network to a further node.

10. The method of claim 9, further comprising updating the container headers of the one or more received containers to include updated occupancy information based on the at least one further client packet.

11. The method of any of claims 9 - 10, wherein the one or more containers are reserved for a client entity associated with the client stream, wherein the further client stream is associated with a further client entity coupled with the node, the node being a transit node for the one or more containers reserved for the client entity.

12. An optical transmitting node for transmitting a client stream comprising at least one client packet through an optical transmission network comprising multiple nodes by synchronously placing the at least one client packet in one or more containers that are routed through the network based on address information in container headers, a container comprising a sequence of subcontainers having subcontainer headers and payload portions, the optical transmitting node comprising:
a client interface configured to obtain the client stream associated with a client entity coupled with the client interface, the client stream comprising the at least one client packet and idle symbols;
a processing unit configured to:
insert the client stream in one or more payload portions of subcontainers; and
determine whether a subcontainer payload portion only comprises idle symbols and in response, mark the subcontainer as idle subcontainer to make the idle subcontainer available for transport of another client stream; and
an optical output interface coupled with the optical transmission network and configured to transmit the one or more containers through the optical transmission network.

13. An optical receiving node for receiving a client stream comprising at least one client packet via an optical transmission network comprising multiple nodes, wherein the at least one client packet has been synchronously placed in one or more containers that are routed through the network based on address information in container headers, a container comprising a sequence of subcontainers having subcontainer headers and payload portions, the optical receiving node comprising:
an optical input interface coupled with the optical transmission network and configured to receive the one or more containers;
a processing unit configured to:
extract the at least one client packet from one or more subcontainer payload portions of the received containers;
determine whether a subcontainer is marked as idle subcontainer and in response, insert one or more idle symbols in a recovered client stream; and
a client interface configured to output the recovered client stream.

14. The optical receiving node of claim 13, further comprising an idle subcontainer buffer configured to provide the one or more idle symbols to be inserted in the recovered client stream, wherein the processing unit is further configured to receive one or more idle symbols from the idle subcontainer buffer and insert them between two consecutive extracted client packets in the recovered client stream, wherein a number of the idle symbols to be inserted is determined based on the number of preceding idle subcontainers that is indicated by the subcontainer header associated with the succeeding one of the two consecutive extracted client packet.

15. An optical switching node for transmitting a client stream comprising at least one client packet through an optical transmission network comprising multiple nodes, wherein the at least one client packet has been synchronously placed in one or more containers that are routed through the network based on address information in container headers, a container comprising a sequence of subcontainers having subcontainer headers and payload portions, a subcontainer header including information whether a subcontainer at the same position in the subcontainer sequence was an idle subcontainer that has been skipped in the received sequence of subcontainers, the optical switching node comprising:
an optical input interface coupled with the optical transmission network and configured to receive the one or more containers;
a client interface coupled with a further client entity associated with the further client stream, the client interface configured to receive a further client stream comprising at least one further client packet directed to the destination node of the received container;
a processing unit configured to:
determine whether at least one free subcontainer is available in a received container for transport of the further client stream; and;
insert the at least one further client packet in the available at least one free subcontainer of the one or more received containers; and
an optical output interface coupled with the optical transmission network and configured to transmit the received one or more containers to a further node.
